Europäisches Patentamt

(19) European Patent Office

Office européen des brevets

(11) Veröffentlichungsnummer: **0 060 996**

**A1**

(12) # EUROPÄISCHE PATENTANMELDUNG

(21) Anmeldenummer: **82101220.0**

(51) Int. Cl.³: **B 62 D 63/08**

(22) Anmeldetag: **18.02.82**

(30) Priorität: **20.03.81 DE 3110905**

(43) Veröffentlichungstag der Anmeldung:
**29.09.82** Patentblatt **82/39**

(84) Benannte Vertragsstaaten:
**AT BE CH DE FR GB IT LI NL SE**

(71) Anmelder: **Bergische Achsenfabrik Fr. Kotz & Söhne**
**Am Ohlerhammer**
**D-5276 Wiehl 1(DE)**

(72) Erfinder: **Korte, Erich**
**Perkerstrasse 37**
**D-5276 Wiehl(DE)**

(72) Erfinder: **Jacobs, Ernst**
**Tristan-Strasse 7**
**D-5276 Wiehl(DE)**

(74) Vertreter: **Patentanwälte Dipl.-Ing. Alex Stenger**
**Dipl.-Ing. Wolfram Watzke Dipl.-Ing. Heinz J. Ring**
**Kaiser-Friedrich-Ring 70**
**D-4000 Düsseldorf 11(DE)**

(54) **Fahrgestell für Anhänger.**

(57) Ein Fahrgestell für Anhänger wird beschrieben, bei dem die Holme (5, 6) der Deichsel (4) an einem Ende mit einer im Grundriß trapezförmigen Flanschplatte (7) und am anderen Ende mit am Achskörper (1) befestigten Achslappen (2, 3) lösbar verbunden sind. Um die gleiche Deichsel für Achsen mit verschiedenen Spurweiten oder bei gleicher Spurweite für verschiedene Längen der Deichsel benutzen zu können, wird vorgeschlagen, daß die vorderen Enden der Achslappen (2, 3) verlängert sind und im Abstand voneinander mehrere Befestigungslöcher (11) für die hinteren Enden der beiden Holme (5, 6) besitzen und daß die rückwärtigen Befestigungslöcher für die Holme (5, 6) in der Flanschplatte (7) als Schlitze (14) ausgebildet sind, damit der Winkel zwischen den beiden Holmen (5, 6) variiert werden kann.

EP 0 060 996 A1

./...

Fig.1

- 1 -

Fahrgestell   für   Anhänger

Die Erfindung betrifft ein Fahrgestell für Anhänger, bei dem die Holme der Deichsel an einem Ende mit einer eine Auflaufbremse und einen Kupplungskopf aufnehmenden, im Grundriß trapezförmigen Flanschplatte und am anderen Ende mit am Achskörper einer Gummi- oder Drehstabfederachse befestigten Achslappen lösbar verbunden sind.

Fahrgestelle der vorstehend beschriebenen Konstruktion sind beispielsweise aus der DE-AS 20 14 192 bekannt. Bei diesen bekannten Fahrgestellen sind die Holme der Deichsel am vorderen Ende starr mit einer im Grundriß trapezförmigen Flanschplatte verbunden, so daß die rückwärtigen Befestigungsenden immer einen gleichen Abstand voneinander haben und deshalb auch nur mit im gleichen Abstand voneinander am Achskörper befestigten Achslappen verbunden werden können. Für Gummi- oder Drehstabfederachsen mit verschiedenen Spurweiten, bei denen die am Achskörper befestigten Achslappen ebenfalls einen unterschiedlichen Abstand voneinander haben, müssen deshalb dazu passende, unterschiedliche Deichseln hergestellt und auf Lager gehalten werden. Auch wenn bei gleicher Spurweite und gleichem Abstand der am Achskörper befestigten Achslappen verschiedene Längen der Deichsel für unterschiedlich lange Aufbauten benötigt werden, müssen unterschiedlich lange Deichseln hergestellt und auf Lager gehalten werden.

Davon ausgehend liegt der Erfindung die A u f g a b e zugrunde, ein Fahrgestell für Anhänger zu schaffen, bei dem die gleiche Deichsel für Achsen mit verschiedenen Spurweiten oder bei gleicher Spurweite für verschiedene Längen der Deichsel benutzbar ist.

Zur L ö s u n g dieser Aufgabe wird vorgeschlagen, daß die vorderen Enden der Achslappen verlängert sind und im Abstand voneinander mehrere Befestigungslöcher für die hinteren Enden der beiden Holme besitzen und daß die rückwärtigen Befestigungslöcher für die Holme in der Flanschplatte als Schlitze ausgebildet sind.

Wenn das erfindungsgemäß ausgebildete Fahrgestell für mehrachsige Anhänger benutzt werden soll, bei denen die Deichsel im Verhältnis zum Achskörper in senkrechter Richtung bewegbar sein muß, wird in weiterer Ausgestaltung der Erfindung vorgeschlagen, in jedem Achslappen zwischen den Befestigungslöchern und dem Achskörper ein scharnierartiges Gelenk mit parallel zum Achskörper verlaufender Drehachse anzuordnen.

Bei einem erfindungsgemäß ausgebildeten Fahrgestell kann der Winkel zwischen den Holmen der Deichsel in bestimmten Grenzen verändert werden, um die rückwärtigen Enden der Holme an den im unterschiedlichen Abstand voneinander angeordneten Achslappen von Achsen mit verschiedener Spurweite befestigen zu können. Da sich bei

- 3 -

einer Vergrößerung des Winkels zwischen den Holmen gleichzeitig die Länge der Deichsel verkürzen würde, sind an den Achslappen mehrere im Abstand voneinander angeordnete Befestigungslöcher vorgesehen, um die Verkürzung der Länge der Deichsel wieder ausgleichen zu können. Es ist aber auch möglich, die erfindungsgemäß ausgebildete Deichsel bei Achsen mit gleicher Spurweite zu benutzen, um die Länge der Deichsel zu variieren. Aus den verschiedenen Anwendungs- und Verstellmöglichkeiten einer erfindungsgemäß ausgebildeten Deichsel ergibt sich der Vorteil einer geringeren Lagerhaltung, weil die gleiche Deichsel für Achsen mit verschiedenen Spurweiten oder bei gleicher Spurweite für verschiedene Längen der Deichsel benutzbar ist.

Weitere Einzelheiten und Vorteile des Gegenstandes der Erfindung ergeben sich aus der nachfolgenden Beschreibung der zugehörigen Zeichnung, in der ein erfindungsgemäß ausgebildetes Fahrgestell schematisch dargestellt worden ist. In der Zeichnung zeigen:

Fig. 1        ein Fahrgestell in Draufsicht;

Fig. 2        dasselbe Fahrgestell entlang der Linie II-II in Fig. 1 geschnitten in Seitenansicht.

Das Fahrgestell besteht aus einem Achskörper 1 einer Gummi- oder Drehstabfederachse mit daran im Abstand voneinander befestigten Achslappen 2, 3, einer Deichsel 4 mit zwei im Winkel zueinander angeordneten Holmen 5, 6 und einer vorderen Flanschplatte 7 für die Aufnahme eines Kupplungskopfes 8 mit Auflaufbremse 9 und Handbremse 10.

- 4 -

In den nach vorne verlängerten Enden der Achslappen 2, 3 sind mehrere, im Abstand voneinander angeordnete Befestigungslöcher 11 vorgesehen. Außerdem ist in jedem Achslappen 2, 3 zwischen dem Achskörper 1 und den Befestigungslöchern 11 ein Gelenk 12 angeordnet, um die Deichsel 4 in senkrechter Richtung bewegen zu können.

Am vorderen Ende sind die Holme 5, 6 der Deichsel 4 mit der im Grundriß trapezförmigen Flanschplatte 7 verbunden. Zu diesem Zweck besitzt die Flanschplatte 7 an ihrem vorderen Ende Befestigungslöcher 13 und an ihrem rückwärtigen Ende Schlitze 14 zum Einführen von Befestigungsbolzen 15.

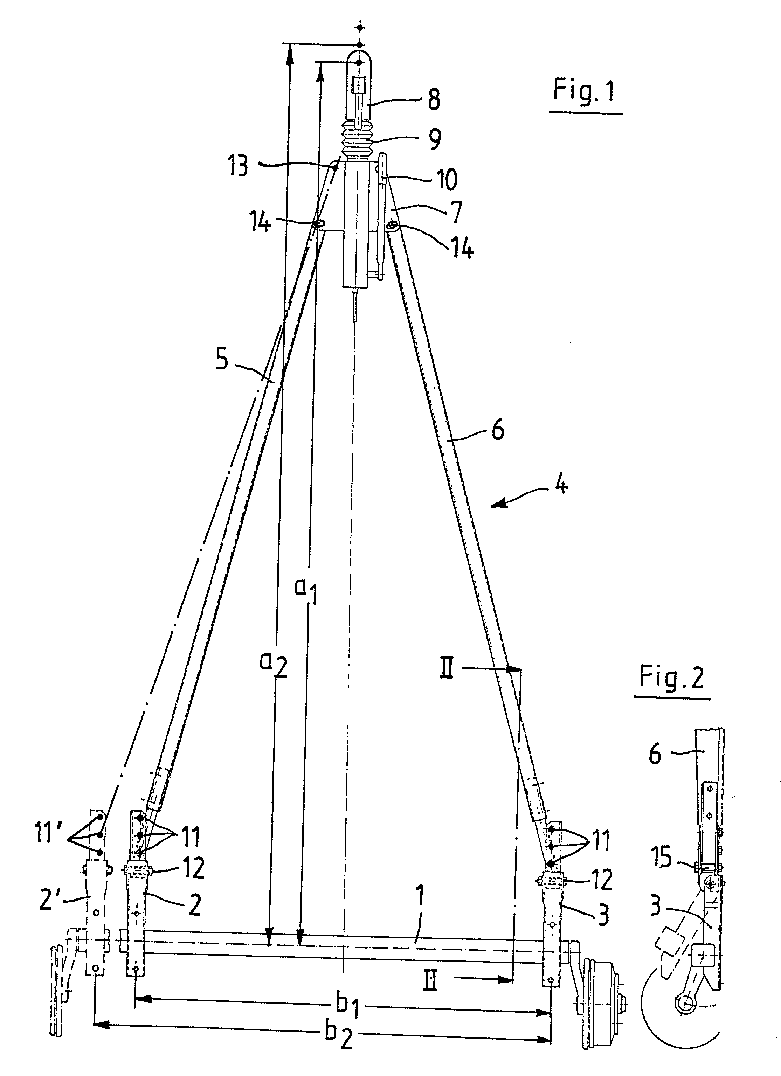

Die in der Fig. 1 dargestellte Deichsel 4, deren Holme 5, 6 an den hinteren Befestigungslöchern 11 mit Befestigungsbolzen 15 befestigt sind, besitzt eine Länge a1. Wenn die rückwärtigen Enden der beiden Holme 5, 6 im gleichen Abstand b1 voneinander in den weiter vorn liegenden Befestigungslöchern 11 befestigt werden, ist es möglich, die Deichsel 4 auf die Länge a2 zu vergrößern. Wenn dagegen bei Achsen mit größerer Spurweite die beiden Achslappen 2' und 3 im Abstand b2 am Achskörper 1 befestigt sind, kann der Winkel zwischen den Holmen 5, 6 nach dem Lösen der Befestigungsbolzen 15 in den Schlitzen 14 so weit vergrößert werden, daß die rückwärtigen Enden der Holme 5, 6 wieder in den Bereich der Befestigungslöcher 11 in den Achslappen 2' und 3 gebracht werden können. Da sich bei einer Vergrößerung des Winkels zwischen den beiden Holmen 5, 6 gleichzeitig die Länge a1 verringern würde, ist es möglich, diese Längenreduzierung durch eine Befestigung der Holme 5, 6 in den weiter vorn liegenden Befestigungslöchern 11 wieder auszugleichen. Bei der Veränderung

- 5 -

des Winkels zwischen den beiden Holmen 5, 6 werden diese um die Befestigungsbolzen 15 in den vorderen Befestigungslöchern 13 der Flanschplatte 7 als Drehachsen verschwenkt.

Um im fertig montierten Zustand wieder eine starre Deichsel zu erhalten, müssen die Befestigungsbolzen 15 in den Befestigungslöchern 11,13 und den Schlitzen 14 kräftig angezogen und gegen unbeabsichtigtes Lösen gesichert werden.

Alle in der Beschreibung erwähnten und in der Zeichnung dargestellten neuen Merkmale sind erfindungswesentlich, auch soweit sie in den Ansprüchen nicht ausdrücklich beansprucht worden sind.

- 6 -

Bezugszeichenliste:

| 1 | Achskörper |
| 2 | Achslappen |
| 3 | Achslappen |
| 4 | Deichsel |
| 5 | Holm |
| 6 | Holm |
| 7 | Flanschplatte |
| 8 | Kupplungskopf |
| 9 | Auflaufbremse |
| 10 | Handbremse |
| 11 | Befestigungslöcher |
| 12 | Gelenk |
| 13 | Befestigungsloch |
| 14 | Schlitz |
| 15 | Befestigungsbolzen |

0060996

- 7 -

<u>A n s p r ü c h e</u>

1. Fahrgestell für Anhänger, bei dem die Holme der Deichsel an einem Ende mit einer eine Auflaufbremse und einen Kupplungskopf aufnehmenden, im Grundriß trapezförmigen Flanschplatte und am anderen Ende mit am Achskörper einer Gummi- oder Drehstabfederachse befestigten Achslappen lösbar verbunden sind, d a d u r c h   g e k e n n z e i c h n e t , daß die vorderen Enden der Achslappen (2, 3) verlängert sind und im Abstand voneinander mehrere Befestigungslöcher (11) für die hinteren Enden der beiden Holme (5, 6) besitzen und daß die rückwärtigen Befestigungslöcher für die Holme (5, 6) in der Flanschplatte (7) als Schlitze (14) ausgebildet sind.

2. Fahrgestell nach Anspruch 1 für mehrachsige Anhänger, dadurch gekennzeichnet, daß in jedem Achslappen (2, 3) zwischen dem Achskörper (1) und den Befestigungslöchern (11) ein scharnierartiges Gelenk (12) mit parallel zum Achskörper verlaufender Drehachse angeordnet ist.

St/ro

0060996

1/1

Fig.1

Fig.2

Europäisches
Patentamt

## EUROPÄISCHER RECHERCHENBERICHT

EP 82 10 1220.0

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| D,A | DE - B2 - 2 014 192 (A. KOBER KG)<br>* Anspruch 1; Spalte 3, Zeile 31 bis Spalte 4, Zeile 15; Fig. 1, 2 *<br>-- | | B 62 D 63/08 |
| Y | DE - U - 7 334 151 (MASCHINENBAU KNOTT)<br>* Anspruch 1; Seite 2, Zeilen 11 bis 26; Fig. 1, 2 *<br>-- | 1 | |
| Y | US - A - 2 797 107 (H.J. BERNARD et al.)<br>* Spalte 2, Zeilen 17 bis 63; Fig. 2 *<br>-- | 1 | **RECHERCHIERTE SACHGEBIETE (Int. Cl.³)** |
| A | DE - B - 1 267 104 (H. MERZ)<br>---- | | B 60 D 1/14<br>B 62 D 21/00<br>B 62 D 63/00 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 28-05-1982 | PETTI |

EPA form 1503.1   06.78